# EUROPÄISCHE PATENTSCHRIFT

(11) **EP 0 760 764 B1**
(45) Veröffentlichungstag und Bekanntmachung des Hinweises auf die Patenterteilung: **29.03.2000**
(21) Anmeldenummer: 95942677.6
(22) Anmeldetag: 15.12.1995
(51) Int. Cl.: B60T 8/36, F15B 13/00

(54) **HYDRAULIKAGGREGAT**
HYDRAULIC UNIT
GROUPE HYDRAULIQUE

(30) Priorität: 07.01.1995 DE 19500350
(43) Veröffentlichungstag der Anmeldung: 12.03.1997
(73) Patentinhaber: Continental Teves AG & Co. oHG, 60488 Frankfurt (DE)
(72) Erfinder: VOLZ, Peter, D-64291 Darmstadt (DE); DINKEL, Dieter, D-65817 Eppstein (DE)
(86) Internationale Anmeldenummer: EP9504978
(87) Internationale Veröffentlichungsnummer: WO9620856

(56) Entgegenhaltungen:
- EP-A- 0 373 551
- EP-A- 0 499 670
- EP-A- 0 787 084
- DE-A- 4 118 834
- DE-A- 4 232 205
- DE-A- 4 234 013
- DE-U- 9 314 742

## Beschreibung

Die Erfindung betrifft ein Hydraulikaggregat für eine hydraulische Steuer- oder Regelvorrichtung, insbesondere für schlupfgeregelte Kraftfahrzeugbremsanlagen, nach dem Oberbegriff des Anspruchs 1.

Bei einem Hydraulikaggregat gemäß der nicht vorveröffentlichten EP-A-787 084 ist nicht auszuschließen, daß bei einem vollflächigen Benetzen der Belüftungsstelle die Belüftungsfunktion der einzelnen Hohlräume eingeschränkt wird. Hierbei kann beim Eintauchen des Hydraulikaggregates in Wasser durch den Abkühlvorgang des Aggregates in den am Druckausgleich gehinderten Hohlräumen ein Unterdruck entstehen, der eine unerwünschte Sogwirkung über die äußeren Dichtstellen zwischen den einzelnen Funktionselementen verursacht. Die damit außer Kraft gesetzte Abdichtung der einzelnen Funktionskomponenten des Hydraulikaggregates erhöht die Korrosionsgefahr und damit die Wahrscheinlichkeit einer Funktionsstörung.

Aus der gattungsbildenden EP-A-373 551 ist bekannt, eine Dichtung zwischen der Abdeckungseinheit und dem Ventilblock anzuordnen, wobei für den Fall, daß eines der Ventile im Ventilblock undicht wird, im Ventilblock oder in der Abdeckungseinheit ein Abflußkanal vorgesehen ist, damit sich im Hohlraum der Abdeckungseinheit keine Bremsflüssigkeit ansammeln kann. Auch die in der Abdeckungseinheit befindliche Steckergruppen sind unabhängig von vorbezeichneter Dichtung durch eine gesonderte Dichtung gegen den übrigen Hohlraum der Abdeckungseinheit abgedichtet.

Der Erfindung liegt die Aufgabe zugrunde, ein Hydraulikaggregat der eingangs genannten Gattung derart weiter zu entwickeln, daß eine ungehinderte Belüftung und Flutung des Hydraulikaggregates ermöglicht wird, ohne daß eine Funktionsbeeinträchtigung zustande kommt. Dies soll mit geringstem Bauteilebedarf auf einfache, billige Weise geschehen, wobei die Funktionssicherheit auch bei verschiedenen Einbaulagen gewährleistet sein soll.

Diese Aufgabe wird erfindungsgemäß durch die kennzeichnenden Merkmale des Patentanspruchs 1 gelöst.

Die Erfindung basiert somit auf dem Gedanken, eine vollflächige Benetzung oder Anlagerung von Flüssigkeitsmolekülen am Belüftungselement zu verhindern und stattdessen durch die entsprechende Oberflächengestaltung des Belüftungselementes die Anlagerung einer Luftblase zu begünstigen. Hierdurch kann sich beim Eintauchen des Hydraulikaggregates in die Flüssigkeit zwischen dem unterdruckgefährdeten Hohlraum und der Luftblase ein Druckausgleich einstellen, der das Nachsaugen von Flüssigkeit über die einzelnen Dichtungen am Hydraulikaggregat verhindert.

Die in den Unteransprüchen angegebenen Merkmale, Vorteile und Anwendungsmöglichkeiten der vorliegenden Erfindung ergeben sich aus der nachfolgenden Beschreibung eines Ausführungsbeispiels anhand einer Zeichnung.

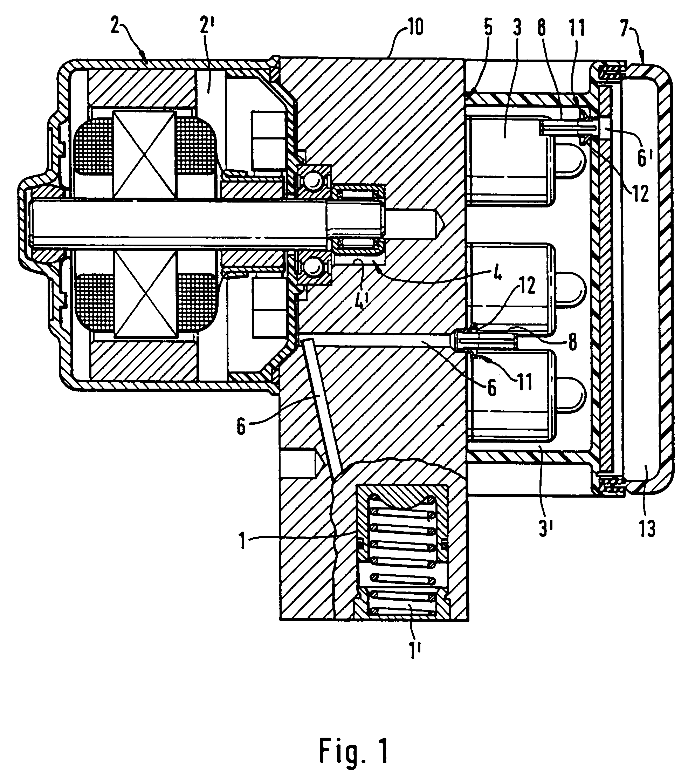

Die Figur 1 zeigt ein Hydraulikaggregat mit einem im Schnitt dargestellten Aufnahmekörper 10 zur Lagerung des Antriebselementes 2, der Ventilelemente 3 und des Speicherelementes 1. Das Antriebselement 2 besteht aus einem Gleichstrommotor, dessen Rotor an einem Wellenende in einem topfförmigen Gehäuse gelagert ist und dessen weiteres Lager in einer Sackbohrung des Aufnahmekörpers 10 geführt ist. Dieses Lager führt die Welle des Antriebselementes 2 in Nähe des Wellenexzenterszapfens, der zur Betätigung eines kolbenförmigen Druckerzeugerelementes 4 ein Nadellager aufweist. Ein weiterer, im Durchmesser verkleinerter Bohrungsabschnitt schließt sich der Lagerstelle des Antriebselementes 2 im Aufnahmekörper 10 an. Auf der Stirnfläche des Aufnahmekörpers 10 befindet sich eine Abdeckungseinheit 7, die die Ventilelemente 3 atmungsaktiv umschließt. Zur Aufnahme von elektrischen bzw. elektronischen Komponenten der Steuervorrichtung ist der Hohlraum 3' unterteilt. In Querlage zum Antriebselement 2 ist das Speicherelement 1 im Aufnahmekörper 10 beweglich ausgerichtet. Der zwischen dem kolbenförmigen Speicherelement 10 und dem zugehörigen Verschlußdeckel gelegene Hohlraum 1' steht über einen Druckausgleichskanal 6 mit dem Hohlraum 2' des Antriebselementes 2 in Verbindung. Hierzu weist die Bürstenplatte des Antriebselementes 2 entsprechende Durchbrüche auf, die eine offene Verbindung zwischen dem Hohlraum 1' und dem Hohlraum 2' herstellen, wobei der Hohlraum 2' des Antriebselementes 2 vorzugsweise über die Spielpassung der Bürstenplatte auf der Antriebswelle und den Abständen zwischen den Lagerkugeln einen Druckausgleichspfad in Richtung des Exzenterraums (Hohlraum 4') aufweist. Der Druckausgleichskanal 6 erstreckt sich gleichfalls durch den Aufnahmekörper 10 bis in den Hohlraum 3'. Dabei ergibt sich ausschließlich über die zwischen dem Aufnahmekörper 10 und der Abdeckungseinheit 7 bestehende Kontaktfläche eine Belüftungsstelle 5, die die Hohlräume im Hydraulikaggregat mit der Atmosphäre verbindet. Etwaige Druckänderungen in Betrieb des Hydraulikaggregates, die insbesondere durch die Bewegung des Speicherelementes 1 den Hohlraum 1' als Expansions- und Kompressionsraum wirken lassen, werden damit ausschließlich innerhalb eines geschlossenen Ventilationskreislaufes übertragen, wobei die durch Rotation erzeugten Ventilationsströme im Hohlraum 2' den Druckänderungen des Speicherelementes 1 untergeordnet sind. Gleichfalls sind die durch die Kolbenoszillation des Druckerzeugerelementes im Hohlraum 4' als auch die durch Rotation des Antriebselementes 2 hervorgerufenen Luftströme von untergeordneter Bedeutung, so daß die Be- und Entlüftungen und damit die Ventilation im Hydraulikaggregat im wesentlichen durch die diskontinuierliche Arbeitsweise des Speicherelementes 1 bestimmt wird. Die Belüftung des Hohlraums 13, der Komponenten der Steuervorrichtung aufnimmt, geschieht über ein semipermeables Belüftungselement 11, das in einen die beiden Hohlräume 3', 13 trennenden Wandabschnitt eingesetzt ist. Ein weiteres Belüftungselement 11 des gleichen Typs befindet sich am Ende des in den Hohlraum 3' einmündenden Druckausgleichskanal 6. Beide Belüftungselemente 11 sind im wesentlichen als hohlzylinderförmige Bauteile ausgeführt und an ihrer Mantelfläche mit trichterförmig in den Hohlraum 3' gerichtete Kragen 12 versehen. Die weitere Mantelfläche eines jeden Belüftungselementes 11 ist mit einem Flüssigkeits- und Festkörperpartikel undurchlässigen, atmungsaktiven Wandabschnitt 8 versehen, an dem sich beim Eintauchen des Hydraulikaggregates in eine Flüssigkeit Luftblasen anlagern können. Die Ausbildung von Luftblasen an den Belüftungselementen 11 wird durch den relativ langen Überstand, die hohlzylinderförmige Gestaltung, den als Wasserabweisungskanten wirksamen Kragen 12 und das gewählte Material beeinflußt. Die Belüftungselemente 11 sind vorzugsweise in die Stirnfläche des Aufnahmekörpers 10, aus dem der Druckausgleichskanal 6 hervortritt und in den Druckausgleichskanal 6', der die Hohlräume 3',13 verbindet eingesetzt. Die Abdeckungseinheit 7 ist zweiteilig ausgeführt, weshalb zwischen dem rahmenförmigen und deckelförmigen Teilen der Abdeckungseinheit 7 eine Dichtung angebracht ist. Das Antriebselement 2 und das Speicherelement 1 sind im Gegensatz zur Abdeckungseinheit 7 am Aufnahmekörper 10 abgedichtet. Somit ergibt sich ausschließlich zwischen der Stirnfläche des Aufnahmekörpers 10 und der Stirnfläche des rahmenförmigen Abschnitts an der Abdeckungseinheit 7 eine quasi offene Belüftungsstelle 5. Über diese Belüftungsstelle 5 kann zwar bei einer Überflutung des Hydraulikaggregates Flüssigkeit in den korrosionsgeschützten Hohlraum 3' eindringen, jedoch durch die flüssigkeitsabweisende Wirkung der Belüftungselemente 11, die jeweils durch den Kragen 12 die Anlagerung von Luftblasen begünstigen, bleibt die Belüftungsfunktion der Belüftungselemente 11 erhalten. Je nach Temperaturgefälle zwischen Hydraulikaggregat und Flüssigkeit wird ein Druckausgleich über die Belüftungselemente 11 zwischen den Hohlräumen 2' und 3' bzw. 13 und 3' hergestellt. Damit ist die Ausbildung eines Unterdrucks sowohl im Hohlraum 2' wie auch im Hohlraum 13 ausgeschlossen, so daß die Dichtungen am Antriebselement 2 und am Deckel der Abdeckungseinheit 7 einer Sogwirkung nicht ausgesetzt sind. Die damit korrosionsgefährdeten Bauteile in den Hohlräumen 1',2' und 13 sind damit einfach und billig tauchfähig abzudichten.

### Bezugszeichenliste

- 1: Speicherelement
- 1': Hohlraum
- 2: Antriebselement
- 2': Hohlraum
- 3: Ventilelement
- 3': Hohlraum
- 4: Druckerzeugerelement
- 4': Hohlraum
- 5: Belüftungsstelle
- 6, 6': Druckausgleichskanal
- 7: Abdeckungseinheit
- 8: Wandabschnitt

- 10: Aufnahmekörper
- 11: Belüftungselement
- 12: Kragen
- 13: Hohlraum

## Patentansprüche

1. Hydraulikaggregat für eine hydraulische Steuer- und/ oder Regelvorrichtung, insbesondere für schlupfgeregelte Kraftfahrzeugbremsanlagen, mit mehereren an einem Aufnahmekörper (10) angeordneten hydraulischen, mechanischen und/oder elektrischen Funktionselementen (1,2,3,4), wie Speicher-, Ventil-, Druckerzeuger- und Antriebselemente, mit mehreren die Funktionselemente (1,2,3,4) miteinander verbindenden Druckmittelkanälen (6,6'), die eine hydraulisch schaltbare Verbindung zwischen wenigstens einer Druckmittelquelle und einem Druckmittelverbraucher herstellen, sowie mit einer Verbindung zu einer Steuervorrichtung zur Betätigung der Funktionselemente (1,2,3,4), mit mehreren, den Funktionselementen (1,2,3,4) zugeordneten Hohlräumen (1',2',3',4',13), dadurch gekennzeichnet, daß die Hohlräume (1',2',3',4',13) an ein gemeinsames Ventilationssystem angeschlossen sind, das die Be- und Entlüftung der Hohlräume (1',2',3',4',13) zum Druckausgleich mit der Atmosphäre ausschließlich über eine Belüftungsstelle (5) ermöglicht, die mit wenigstens einem Druckausgleichskanal (6,6') des Ventilationssystems in Verbindung steht, wobei in dem zur Belüftungsstelle (5) benachbarten Hohlraum (3') wenigstens ein semipermeables Belüftungselement (11) eingesetzt ist, das mit einer flüssigkeitsabweisenden Oberfläche versehen ist, an der sich beim Eintauchen des Hydraulikaggregates in ein Fluid eine Luftblase anlagert, und daß das Belüftungselement (11) aus einem im wesentlichen hohlzylinderförmigen Bauteil besteht, das mit einem flüssigkeitsabweisenden Kragen (12) in den Hohlraum (3') gerichtet ist.

2. Hydraulikaggregat nach Anspruch 1, dadurch **gekennzeichnet**, daß das Belüftungselement (11) eine gasdurchlässige, jedoch Flüssigkeits- und Festkörperpartikel undurchlässigen Wandabschnitt (8) aufweist, der in dem zur Belüftungsstelle (5) nächstgelegenen Hohlraum (3') gerichtet ist.

3. Hydraulikaggregat nach einem der Ansprüche 1 oder 2, dadurch **gekennzeichnet**, daß das Belüftungselement (11) eine atmungsaktive Membran aufnimmt.

4. Hydraulikaggregat nach Anspruch 1, dadurch **gekennzeichnet**, daß das Belüftungselement (11) an seiner Mantelfläche eine Flüssigkeits- und Festkörperpartikel undurchlässigen, atmungsaktiven Wandabschnitt (8) aufweist.

5. Hydraulikaggregat nach Anspruch 1, dadurch **gekennzeichnet,** daß der Kragen (12) in Richtung des Hohlraums (3') trichterförmig geöffnet ist.

6. Hydraulikaggregat nach Anspruch 1, dadurch **gekennzeichnet**, daß das Belüftungselement (11) in den Druckausgleichskanal (6) eingesetzt ist und mit dem Kragen (12) in den Hohlraum (3') gerichtet ist, der der Belüftungsstelle (5) am nächsten gelegen ist.

## Claims

1. Hydraulic assembly for a hydraulic controlling and/or regulating device, in particular for slip-controlled automotive vehicle brake systems, which includes a plurality of hydraulic, mechanical and/or electrical functional elements (1,2,3,4), such as accumulator elements, valve elements, pressure-generating and drive elements, which are arranged on an accommodating member (10), a plurality of pressure fluid channels (6,6') which interconnect the functional elements (1,2,3,4) and provide a hydraulically operable connection between at least one pressure fluid source and a pressure fluid consumer, and a connection to a controlling device for the actuation of the functional elements (1,2,3,4), and including a plurality of hollow chambers (1',2',3',4',13) associated with the functional elements (1,2,3,4),
**characterized** in that the hollow chambers (1',2',3',4',13) are connected to a joint ventilation system which permits ventilation and bleeding of the hollow chambers (1',2',3',4',13) for the pressure balance with the atmosphere exclusively by way of a point of ventilation (5) which is connected to at least one pressure compensation channel (6,6') of the ventilation system, wherein at least one semipermeable ventilation element (11) is inserted into the hollow chamber (3') adjacent to the point of ventilation (5) that has a fluid-repellent surface on which an air bubble accumulates when the hydraulic assembly is immersed into a fluid, and in that the ventilation element (11) is comprised of a generally hollow-cylindrical component which, with a fluid-repellent collar (12), is directed into the hollow chamber (3').

2. Hydraulic assembly as claimed in claim 1,
**characterized** in that the ventilation element (11) has a gas-permeable wall portion (8) which is, however, impermeable to fluids and solid particles and is directed into the hollow chamber (3') that is closest to the point of ventilation (5).

3. Hydraulic assembly as claimed in any one of claims 1 or 2,
**characterized** in that the ventilation element (11) accommodates a breathing diaphragm.

4. Hydraulic assembly as claimed in claim 1,
**characterized** in that the ventilation element (11) on its peripheral surface has a breathing wall portion (8) which is impermeable to fluids and solid particles.

5. Hydraulic assembly as claimed in claim 1,
**characterized** in that the collar (12) is opened like a funnel in the direction of the hollow chamber (3').

6. Hydraulic assembly as claimed in claim 1,
**characterized** in that the ventilation element (11) is inserted into the pressure compensation channel (6) and, with the collar (12), is directed into the hollow chamber (3') which is closest to the point of ventilation (5).

## Revendications

1. Ensemble hydraulique pour dispositif de commande et/ou de régulation hydraulique, notamment pour systèmes de freinage de véhicule automobile à régulation de glissement, comprenant plusieurs éléments fonctionnels hydrauliques, mécaniques et/ou électriques (1, 2, 3, 4), tels qu'élément accumulateur, élément de valve, élément générateur de pression et élément d'entraînement, disposés sur un corps de logement (10), plusieurs conduits d'agent de pression (6, 6') reliant entre eux les éléments fonctionnels (1, 2, 3, 4) et produisant une liaison commutable d'une manière hydraulique entre au moins une source d'agent de pression et un utilisateur d'agent de pression, une liaison avec un dispositif de commande servant à actionner les éléments fonctionnels (1, 2, 3, 4) et plusieurs cavités (1', 2', 3', 4', 13) associées aux éléments fonctionnels (1, 2, 3, 4), caractérisé en ce que les cavités (1', 2', 3', 4', 13) sont raccordées à un système de ventilation commun qui permet la mise à l'air et l'évacuation d'air des cavités (1', 2', 3', 4', 13), en vue de l'équilibre de pression avec l'atmosphère, exclusivement par l'intermédiaire d'un emplacement de mise à l'air (5) qui communique avec au moins un conduit d'équilibre de pression (6, 6') du système de ventilation, tandis que, dans la cavité (3') voisine de l'emplacement de mise à l'air (5), il est monté au moins un élément de mise à l'air (11) semiperméable qui est pourvu d'une surface écartant les liquides sur laquelle une bulle d'air se fixe lorsque l'ensemble hydraulique est plongé dans un fluide, et en ce que l'élément de mise à l'air (11) est constitué d'une pièce essentiellement cylindrique creuse qui est dirigée dans la cavité (3') par un collet (12) écartant les liquides.

2. Ensemble hydraulique suivant la revendication 1, caractérisé en ce que l'élément de mise à l'air (11) comprend une section de paroi (8) perméable aux gaz, mais imperméable aux particules de liquide et aux particules de matières solides, qui est dirigée dans la cavité (3') située le plus près de l'emplacement de mise à l'air (5).

3. Ensemble hydraulique suivant l'une des revendications 1 ou 2, caractérisé en ce que l'élément de mise à l'air (11) reçoit une membrane qui respire.

4. Ensemble hydraulique suivant la revendication 1, caractérisé en ce que l'élément de mise à l'air (11) comporte, sur sa surface périphérique, une section de paroi (8) qui respire et est imperméable aux particules de liquide et aux particules de matières solides.

5. Ensemble hydraulique suivant la revendication 1, caractérisé en ce que le collet (12) est ouvert en forme de d'entonnoir en direction de la cavité (3').

6. Ensemble hydraulique suivant la revendication 1, caractérisé en ce que l'élément de mise à l'air (11) est monté dans le conduit d'équilibre de pression (6) et est dirigé par le collet (12) dans la cavité (3') qui est située le plus près de l'emplacement de mise à l'air (5).
